Europäisches Patentamt

European Patent Office

Office européen des brevets

(11) Numéro de publication : **0 104 116**
**B1**

## FASCICULE DE BREVET EUROPÉEN

(45) Date de publication du fascicule du brevet :
30.07.86

(51) Int. Cl.⁴ : **A 61 C   5/06**

(21) Numéro de dépôt : **83401802.0**

(22) Date de dépôt : **15.09.83**

(54) Doseur-mélangeur automatique d'amalgames dentaires.

(30) Priorité : **17.09.82 FR 8215916**

(43) Date de publication de la demande :
**28.03.84 Bulletin 84/13**

(45) Mention de la délivrance du brevet :
**30.07.86 Bulletin 86/31**

(84) Etats contractants désignés :
**AT BE CH DE GB IT LI LU NL SE**

(56) Documents cités :
**FR-A- 1 570 780**

(73) Titulaire : **CAVEX - FRANCE, SARL**
**1, Rue de la Vanne**
**F-81200 Mazamet (FR)**

**COMAT, SARL**
**20, Avenue Honoré-Serres**
**F-31000 Toulouse (FR)**

**MICROTEC, SARL**
**Route de Baziège-Labège**
**F-31320 Castanet-Tolosan (FR)**

(72) Inventeur : **Cunisse, Michel**
**11 Rue Watteau**
**F-31240-Saint-Jean-de-l'Union (FR)**
Inventeur : **Granier, Patrick**
**41 Rue de la République**
**F-81200 Mazamet (FR)**
Inventeur : **D'Hollosy, Antoine**
**Myndensedyk**
**20 Loenen Aan-de-Vecht (NL)**
Inventeur : **De Pinho, Daniel**
**6, Impasse des Dalhias**
**F-31200 Toulouse (FR)**

(74) Mandataire : **Morelle, Guy Georges Alain**
**Cabinet SCOPI 1, Avenue de Ranguell**
**F-31400 Toulouse (FR)**

Jouve, 18, rue St-Denis, 75001 Paris, France

## Description

La présente invention concerne un appareil permettant d'assurer un dosage et un mélange, automatiques et programmés, des constituants d'amalgames dentaires à base de poudre d'argent.

Un tel appareil, appelé « doseur-mélangeur » dans le contexte de la présente invention, comprend classiquement un réservoir pour le mercure et un réservoir pour la poudre d'argent, ouverts à leur partie inférieure et débouchant, par des moyens de distribution et de dosage des produits, à l'intérieur d'un mélangeur muni en sortie d'un godet de récupération. Cependant, les amalgames dentaires obtenus à partir des doseurs-mélangeurs connus ne sont pas toujours conformes aux pourcentages souhaités dans la répartition des produits du mélange, ceci étant dû notamment au fait de l'imprécision des dosages opérés. En effet, le dosage des deux constituants nécessaires à l'amalgame, s'opère généralement au moyen d'un seul et même dispositif de distribution. Compte tenu du fait que les propriétés physiques des deux constituants de l'amalgame dentaire sont différentes (l'un est un métal liquide et l'autre un métal en poudre) on comprend dès lors qu'un seul dispositif de distribution ne pourra pas délivrer avec la même précision des quantités dosées de mercure et de poudre d'argent. Les brevets français FR-A-2 227 850 et FR-A-1 570 780 décrivent et représentent un tel appareil dans lequel le dispositif permettant de doser les constituants d'amalgames dentaires est formé d'un cylindre ou d'un arbre monté en rotation et comportant sur sa longueur deux espaces de dosage, l'un pour le mercure et l'autre pour la poudre d'argent. Il est difficile avec un tel appareil, de programmer un pourcentage différent d'un des constituants de l'amalgame dentaire car ce pourcentage est fixe et proportionnel au rapport des volumes définis par les deux espaces de dosage.

Faisant le bilan de cet état de fait, les demandeurs ont imaginé un doseur-mélangeur d'amalgames dentaires permettant de remédier aux inconvénients précités et capable d'assumer un enchaînement automatique et continu des opérations de dosage et de mélange. Cet appareil comprenant de manière classique un réservoir pour le mercure et un réservoir pour la poudre d'argent, ouverts à leur partie inférieure et débouchant, par des moyens de distribution et de dosage des produits, à l'intérieur d'un mélangeur muni en sortie d'un godet de récupération, est remarquable en ce que les susdits moyens de distribution et de dosage des produits stockés dans les réservoirs sont constitués par deux convoyeurs — un pour la poudre d'argent et un pour le mercure — montés rotatifs à l'intérieur de deux fourreaux et munis sur leur longueur de deux lumières d'admission et de sortie de poudre d'argent et de mercure. Les mouvements rotatifs de chacun de ces convoyeurs sont imprimés par des moteurs pas à pas.

Cette disposition permet notamment d'une part, d'adopter une conception différente pour chacun des deux convoyeurs et, d'autre part, de commander un nombre différent de quantités dosées de chacun des constituants de l'amalgame.

Selon une réalisation préférentielle de l'invention, le convoyeur de la poudre d'argent est une vis transporteuse.

Selon une autre réalisation préférentielle de l'invention le convoyeur du mercure est un barillet muni sur sa périphérie d'au moins une encoche calibrée, adoptant de préférence la forme d'un méplat. Cette forme de l'encoche permet de supprimer les forces d'adhérence du mercure aux parois de l'encoche lorsque la gouttelette de mercure tombe sous l'effet de la pesanteur.

Selon une caractéristique avantageuse de l'invention, le susdit mélangeur est soumis à des vibrations au moyen d'un appareil appelé vibreur et constitué d'un arbre incliné dont une extrémité est associée audit mélangeur et l'autre est associée, de manière excentrée, à une couronne animée d'un mouvement de rotation. Cet arrangement est remarquable car il permet d'une part, un développement très complet des mouvements de vibrations nécessaires au brassage du mélange et, d'autre part, de faire varier la durée des susdites vibrations en fonction de celle d'excitation des moyens d'entraînement de la rotation de la couronne-support de l'arbre incliné.

Afin d'automatiser et de programmer les opérations nécessaires au fonctionnement des organes du doseur-mélangeur d'amalgames dentaires de l'invention, les demandeurs ont imaginé un dispositif de commande constitué d'une unité centrale de commande électronique qui détermine, en fonction d'un programme de travail préétabli et enregistré par l'utilisateur au moyen d'un pupitre de commande, la mise en service sélective des trois moteurs d'entraînement des mouvements de rotation des deux convoyeurs et du vibreur. Le programme préétabli comprenant la densité de la poudre d'argent, la masse totale d'amalgame dentaire à délivrer, le pourcentage de mercure dans cet amalgame et la durée des vibrations, permet à l'utilisateur du doseur-mélangeur de l'invention de commander les données paramétriques de ce programme au moyen dudit pupitre afin d'obtenir sans autre intervention humaine, un amalgame dentaire respectant scrupuleusement ces données.

Bien que les aspects généraux de l'invention considérés comme nouveaux soient exprimés ci-dessus, de plus amples détails concernant des méthodes préférées et d'autres caractéristiques de celle-ci, seront mieux compris en se référant à la description détaillée ci-dessous et aux dessins l'accompagnant sur lesquels :

La figure 1 est une vue en perspective illustrant l'intérieur d'un doseur-mélangeur conforme à l'invention, et plus particulièrement son mécanisme interne.

La figure 2 est une vue en coupe latérale du dessin de la figure 1, selon un plan vertical passant par le réservoir de poudre d'argent.

La figure 3 est une vue en coupe latérale du dessin de la figure 1, selon un plan vertical passant par le réservoir de mercure.

La figure 4 est une vue en coupe frontale d'un organe du doseur-mélangeur de la figure 1, selon un plan passant par les deux réservoirs.

Les figures 5 et 6 sont des vues en perspectives éclatées de différents organes du doseur-mélangeur de la figure 1.

La figure 7 représente selon deux vues frontale et latérale, un organe du doseur-mélangeur de la figure 5.

La figure 8 est une vue en perspective illustrant l'extérieur du doseur-mélangeur des figures 1 à 7.

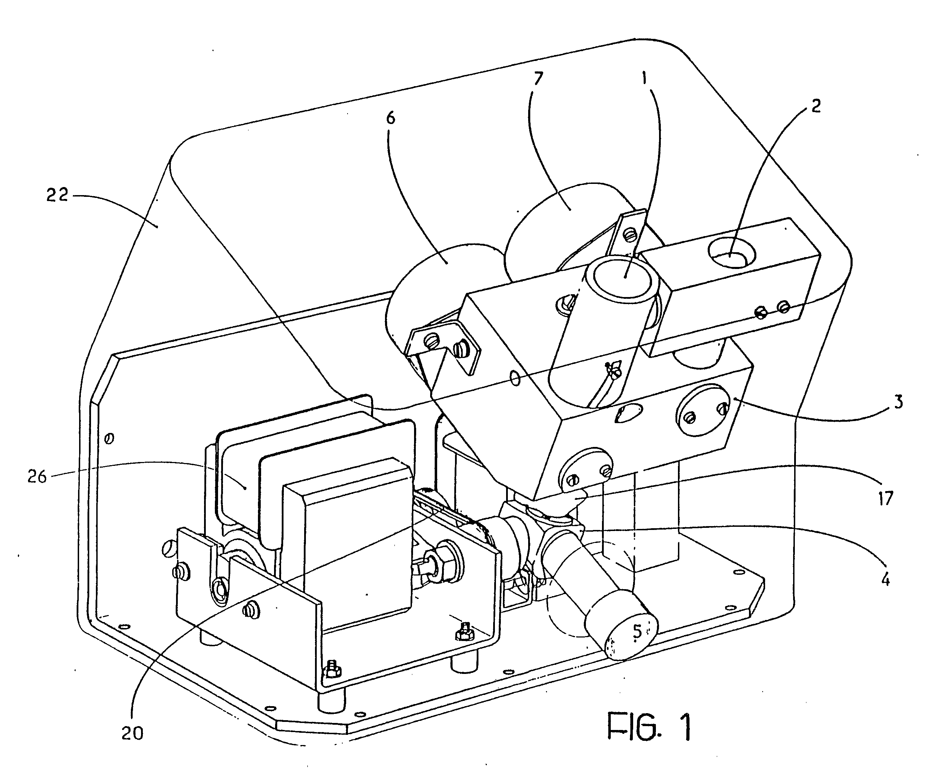

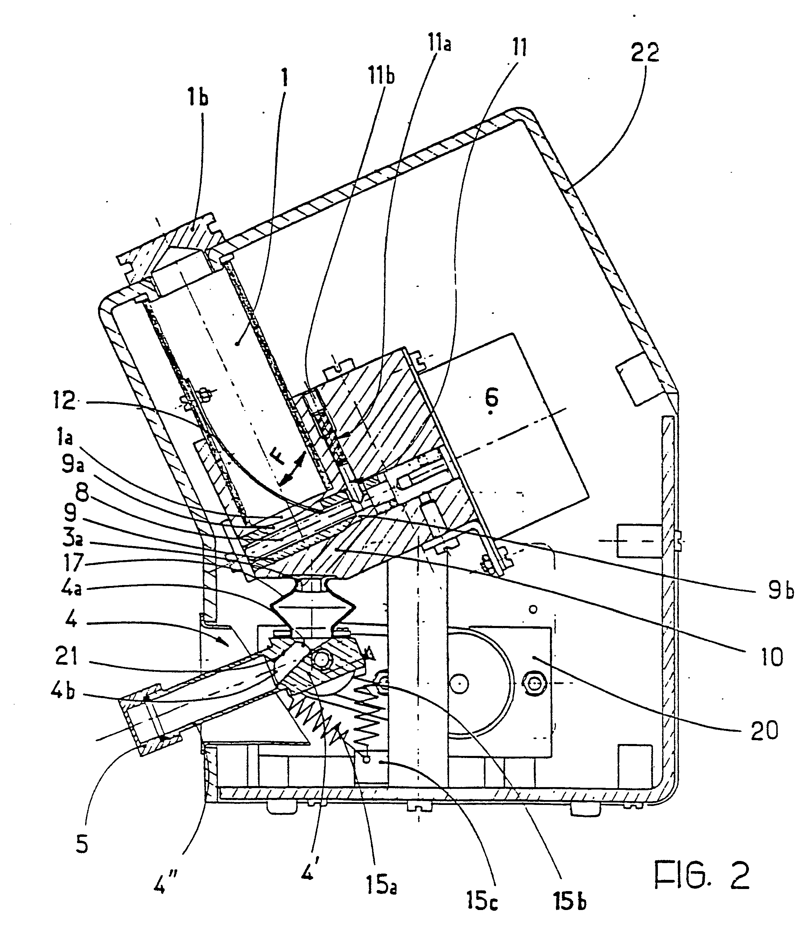

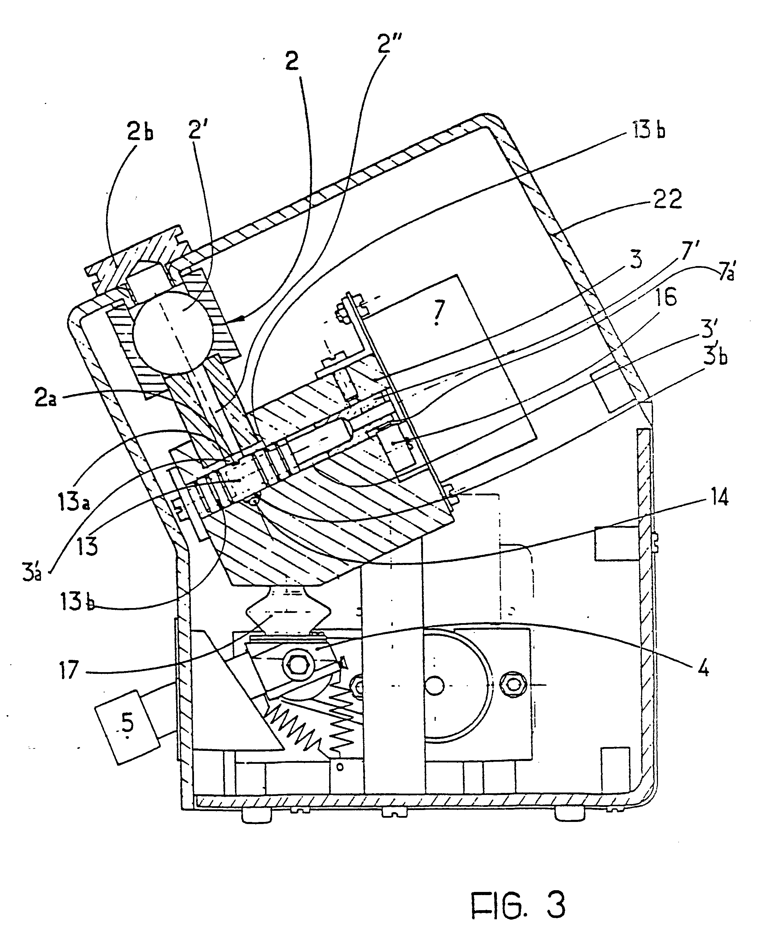

Le doseur-mélangeur automatique d'amalgames dentaires représenté sur le dessin de la figure 1, est constitué classiquement d'un réservoir 1 pour la poudre d'argent et d'un réservoir 2 pour le mercure. Ces deux réservoirs sont ouverts à leur partie inférieure (ces ouvertures sont référencées $1_a$ et $2_a$ sur les dessins des figures 2 et 3) et débouchent par des moyens de distribution et de dosage rassemblés à l'intérieur d'une pièce 3 les enveloppant, à l'intérieur d'un mélangeur 4 muni en sortie d'un godet de récupération 5 de l'amalgame dentaire dosé et mélangé.

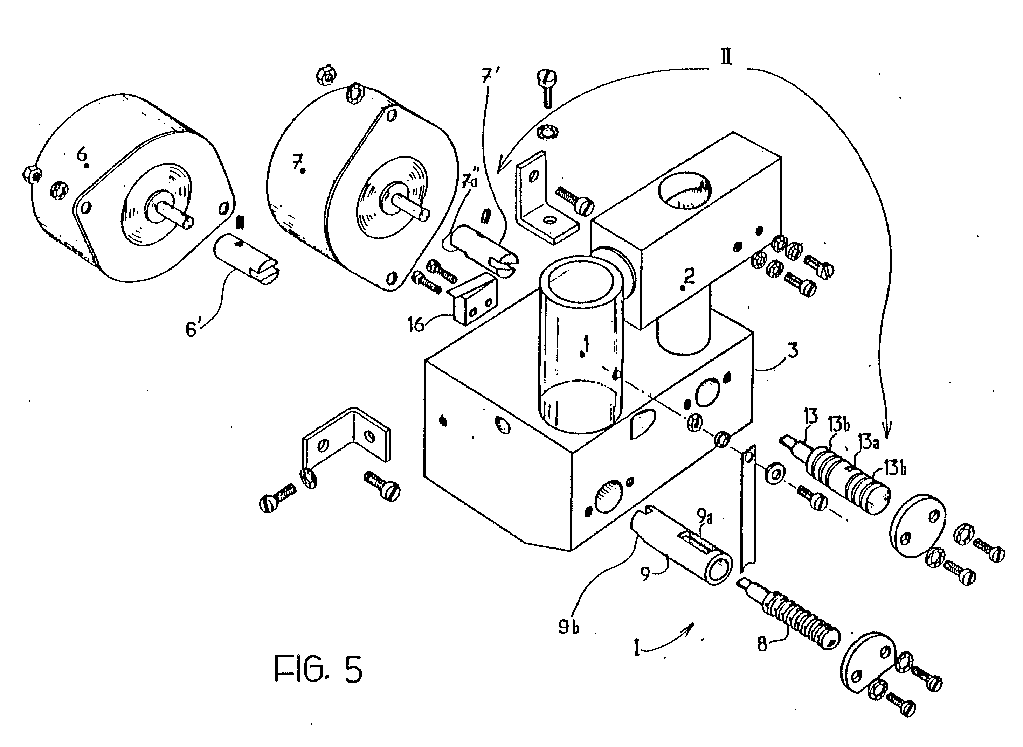

Les moyens de distribution et de dosage des produits stockés dans les réservoirs 1 et 2 sont constitués par deux convoyeurs agencés à l'intérieur de la pièce 3 et animés chacun d'un mouvement de rotation imprimé par des moteurs pas à pas 6 et 7, ceci par l'intermédiaire d'accouplements 6' et 7' respectivement (cf. figure 5).

Le dessin de la figure 2 a pour objet d'illustrer le cheminement de la poudre d'argent entre le réservoir 1 et le godet de récupération 5.

Selon une réalisation préférentielle de l'invention, le convoyeur de poudre d'argent, référencé I dans son ensemble et illustré plus en détails à la figure 5, est constitué d'une vis filetée 8 montée rotative à l'intérieur d'un fourreau 9 et entraînée au moyen du moteur 6 et de son accouplement 6'. Ce fourreau 9 est muni de deux lumières $9_a$ et $9_b$ dont la première est située face à la base ouverte $1_a$ du réservoir 1 et la seconde, située à l'autre extrémité du filetage de la vis 8, débouche à l'intérieur d'un conduit court incliné 10 qui dirige alors la poudre vers le mélangeur 4. Ainsi, la poudre d'argent stockée dans le réservoir 1 tombe, sous l'effet de la pesanteur et par l'intermédiaire des orifices $1_a$ et $9_a$, dans la rainure du filetage de la vis 8. Cette dernière amène, sous l'effet de sa rotation entraînée par le moteur 6, la poudre à son extrémité opposée pour l'introduire, via la lumière $9_b$, à l'intérieur du conduit incliné 10. On comprend dès lors que le pas du filetage de la vis transporteuse 8 et le nombre de tours de cette dernière, détermineront, pris en combinaison avec d'autres paramètres, différentes quantités dosées de poudre d'argent.

Selon une caractéristique particulièrement avantageuse de l'invention, le convoyeur I de la poudre d'argent comporte un plot 11 préformé pour se loger à l'intérieur de la rainure définie par le fond de filet de la vis transporteuse 8. Ce plot est maintenu plaqué à l'intérieur de la susdite rainure au moyen d'un ressort $11_a$, disposé normalement à l'axe de la vis 8 et en un point de cette dernière situé diamétralement opposé à la lumière $9_b$ du fourreau 9. Une vis $11_b$ permet de régler la raideur du ressort $11_a$ et, par voie de conséquence l'intensité de la force d'application du plot 11 dans le fond de filet de la vis 8. Ce plot 11 a pour objet d'éviter les bourrages à l'extrémité de la vis 8 et de faire tomber toute la poudre dans la lumière $9_b$. Ces bourrages, en effet, auraient pour conséquence immédiate d'amonceler la poudre à la susdite extrémité de la vis 8 et de fausser considérablement la précision du dosage.

Selon une autre caractéristique particulièrement avantageuse de l'invention, le réservoir 1 de poudre d'argent est muni d'un ressort à lame 12 dont l'extrémité supérieure est fixée à la paroi interne du réservoir et l'extrémité inférieure est libre et prend appui sur le filetage de la vis 8. Ainsi, cette lame développe un mouvement de va-et-vient (flèche à double sens F), sous l'effet de la rotation de la vis transporteuse 8. Ce mouvement de va-et-vient a pour avantage de supprimer le compactage de la poudre d'argent à l'intérieur du réservoir 1.

Le dessin de la figure 3 a pour objet d'illustrer le cheminement du mercure entre son réservoir de stockage 2 et le mélangeur 4.

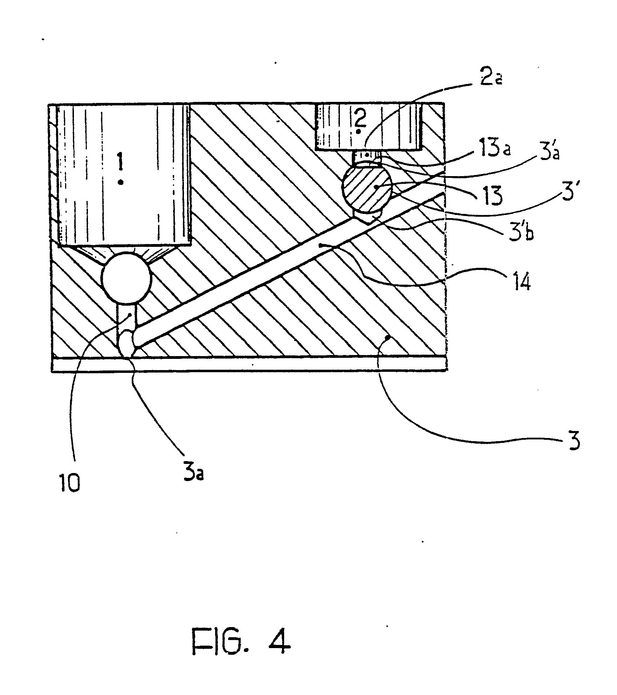

Selon une réalisation préférentielle de l'invention, le convoyeur du mercure, référencé II dans son ensemble et illustré plus en détails à la figure 5, est constitué d'un barillet 13 muni sur sa périphérie d'une encoche $13_a$. Ce barillet 13 est animé d'un mouvement de rotation imprimé par le moteur 7 et l'accouplement 7', à l'intérieur d'un fourreau 3' illustré à la figure 4 et ménagé dans la matière de la pièce 3. Ce fourreau est muni de deux lumières, dont l'une $3'_a$, dite d'admission, est découpée face à la base ouverte $2_a$ du réservoir 2 et l'autre $3'_b$, dite de sortie, débouche dans l'entrée d'un conduit long incliné 14 relié à son extrémité opposée à celle du conduit court incliné 10 d'acheminement de la poudre d'argent. Ainsi, lorsque l'encoche $13_a$ du barillet 13 se trouve face à l'ouverture $2_a$ du réservoir 2, le mercure s'écoule dans la susdite encoche qu'elle remplit. Cette dernière, sous l'effet de la rotation du barillet 13, vient ensuite se positionner devant la lumière $3'_b$ du fourreau 3' débouchant dans l'entrée du conduit long incliné 14. La gouttelette de mercure qui stagnait alors dans l'encoche, n'est plus retenue aux parois de cette dernière et s'écoule à l'intérieur du conduit 14 pour rejoindre le conduit 10.

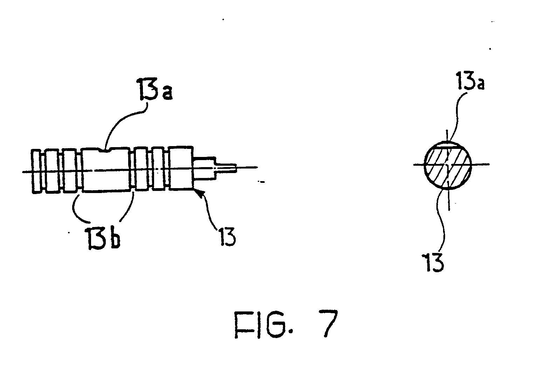

Selon une réalisation préférentielle de l'invention qu'illustre le dessin de la figure 7, l'encoche $13_a$ du barillet 13 la forme d'un méplat. Cette forme a été choisie en raison des faibles forces d'adhérence du mercure aux parois et de sa facilité d'usinage par simple fraisage. En effet, cette configuration est nécessaire pour délivrer de petites quantités de mercure. Des essais sur d'autres configurations d'encoche 13$_a$, par exemple une forme demi-sphérique ou conique, ont permis de constater que lorsque l'encoche était en regard du conduit long incliné 14, la gouttelette de mercure ne s'écoulait pas car elle épousait parfaitement les parois de la demi-sphère ou du cône, de sorte que la résultante des forces d'adhérence du mercure auxdites parois étaient supérieures à celle de la pesanteur qui a tendance à faire tomber la gouttelette.

Selon une autre réalisation préférentielle de l'invention qu'illustre le dessin de la figure 3, le réservoir 2 de mercure offre à sa partie supérieure 2', un grand volume utile. Cette disposition a pour effet de maintenir dans le rétrécissement de la colonne 2″ située à la partie inférieure de ce réservoir sous le volume de stockage 2', une pression suffisante pour assurer une régularité du débit de l'écoulement du mercure dans l'encoche 13$_a$.

Selon une caractéristique particulièrement avantageuse de l'invention, l'accouplement 7' du barillet 13 à son moteur d'entraînement 7 est muni à une extrémité d'un méplat 7'$_a$ servant de point de repère à l'encoche 13$_a$, lors de la rotation du susdit barillet. Ce méplat est en relation avec un contacteur électrique à lame 16 qui est en liaison, directe ou indirecte, avec l'excitation du moteur d'entraînement 7 de manière à ce que l'encoche 13$_a$ soit toujours positionnée au même endroit à la fin de chaque opération de dosage.

On remarquera également sur les dessins des figures 5 et 7 que des gorges périphériques 13$_b$ ont été ménagées sur le barillet 13, de part et d'autre de l'encoche 13$_a$, afin de créer des pressions différentielles qui parachèvent l'étanchéité du barillet 13 dans son fourreau 3', étanchéité déjà assurée par un faible jeu entre les éléments 13 et 3'.

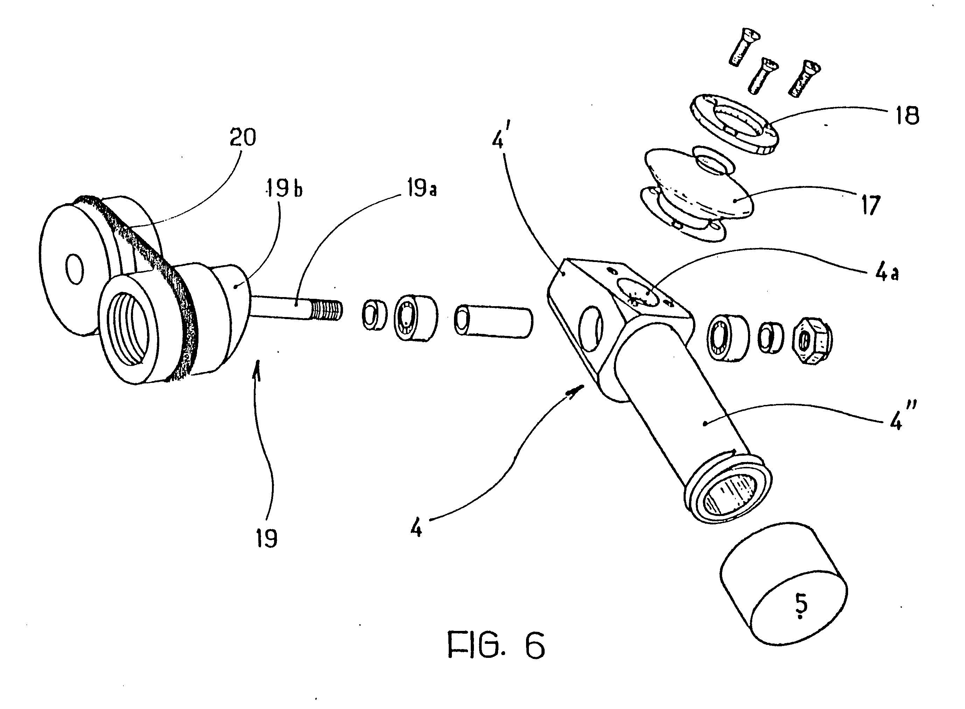

Lorsque la poudre d'argent et le mercure ont été dosés respectivement par la vis transporteuse 8 et par le barillet 13, les deux produits sont guidés par les conduits inclinés 10 et 14 pour déboucher, comme on peut le voir sur les dessins des figures 2 et 3, dans l'orifice d'entrée 4$_a$ du mélangeur 4, ceci à l'aide d'un connecteur souple déformable 17 adoptant la forme préférentielle d'un soufflet. Ce dernier permet avantageusement d'obtenir une liaison souple entre la sortie de la pièce 3, pourvue à cet effet d'un embout de raccordement 3$_a$ sur lequel il est fixé au moyen d'une collerette par exemple (cf. figure 2), et l'entrée 4$_a$ du mélangeur 4, par des moyens de fixation appropriés 18 (cf. figure 6).

Selon une caractéristique particulièrement avantageuse de l'invention, le mélangeur 4 dans son ensemble est soumis à des vibrations au moyen d'un vibreur 19 constitué d'un arbre incliné 19$_a$ dont une extrémité est associée audit mélangeur 4 et l'autre extrémité est associée, de manière excentrée, à une couronne 19$_b$ animée d'un mouvement de rotation créé par des moyens d'entraînement par courroie 20. On comprend alors que les évolutions du mélangeur 4, soumis aux vibrations du vibreur 19, sont rendues possibles grâce à la présence du soufflet 17 qui assure une certaine liberté dans la liaison entre le mélangeur 4 qui est mobile et la pièce 3 (contenant les convoyeurs I et II) qui est, quant à elle, fixe.

Selon une caractéristique préférentielle de l'invention, l'équilibre du mélangeur 4 autour de l'arbre 19$_a$ est assuré par la présence de deux ressorts 15$_a$ et 15$_b$ (cf. figure 2) calés entre le mélangeur 4 et un élément mobile 15$_c$ permettant de régler l'inclinaison dudit mélangeur.

Selon une réalisation préférentielle de l'invention, le mélangeur 4 est constitué d'une part, d'un boîtier de jonction 4' muni de l'ouverture 4$_a$ et associé à l'arbre incliné 19$_a$ du vibreur 19 et, d'autre part, d'un conduit 4″ dont une extrémité est reliée à une ouverture de sortie 4$_b$ ménagée dans le boîtier 4' et l'autre extrémité est pourvue à son embout d'un filetage mâle destiné à recevoir de manière amovible le susdit godet 5 de récupération d'amalgames dentaires, préformé à cet effet d'un filetage femelle. Il est utile de préciser que la sortie 4$_b$ et l'entrée 4$_a$ du boîtier de jonction 4' sont en communication au moyen d'un conduit 21 reliant les deux ouvertures (comme cela est montré sur le dessin de la figure 2) et guidant le mélange de poudre d'argent et de mercure du soufflet 17 au conduit 4″.

Il va de soi bien évidemment, que les différents organes nécessaires au fonctionnement du doseur-mélangeur de l'invention ont été représentés et décrits ci-dessus dans leur forme la plus élémentaire, ignorant les accessoires tels que les bagues de guidage, les bagues d'étanchéité, les moyens de fixation, etc...., qui seront judicieusement adaptés par un homme de métier. Il en est de même pour l'agencement des différents organes qui pourra être organisé de manière différente sans pour autant changer les concepts fondamentaux de l'invention.

Le fonctionnement de ce doseur-mélangeur est le suivant.

Une fois les réservoirs 1 et 2 remplis respectivement de poudre d'argent et de mercure (ces réservoirs sont de préférence inclinés pour faciliter le remplissage et munis à leur extrémité d'un bouchon de sécurité respectivement 1$_b$ et 2$_b$) la poudre d'argent d'une part, tombe, à travers l'orifice 1$_a$ de son réservoir et la lumière 9$_a$ du fourreau 9, à l'intérieur des rainures dessinées par les spires de la vis transporteuse 8 et le mercure d'autre part, s'écoule, via l'orifice 2$_a$ de son réservoir et la lumière 3'$_a$ du fourreau 3', à l'intérieur de l'encoche 13$_a$ du barillet 13.

Lorsque les moteurs 6 et 7 sont excités, le premier commande la rotation de la vis transporteuse 8 pour amener la poudre d'argent à son extrémité où se trouve la lumière de sortie 9$_b$ du fourreau 9 et le second moteur 7 entraîne la rotation du barillet 13 de manière à ce que l'encoche 13$_a$ qui se trouve face à la lumière d'admission 3'$_a$ du fourreau 3' soit amenée en face de la lumière de sortie 3'$_b$.

Les quantités dosées de poudre d'argent et de mercure sont ensuite acheminées par l'intermédiaire du conduit court incliné 10 pour la poudre d'argent et du conduit long incliné 14 pour le mercure, vers la sortie de la pièce 3 au niveau de la pièce de raccordement 3$_a$. Le mélange progresse ensuite en passant successivement par le soufflet 17, le conduit 21, et le conduit 4″, vers l'intérieur du godet de récupération 5. A ce moment, le moteur 20 d'entraînement du vibreur 19 est excité de manière à obtenir un brassage homogène du mélange contenu dans le godet 5. A la fin de la durée des vibrations souhaitées, le moteur 20 est arrêté et l'utilisateur peut alors dévisser le godet 5 et récupérer l'amalgame dentaire stagnant à l'intérieur.

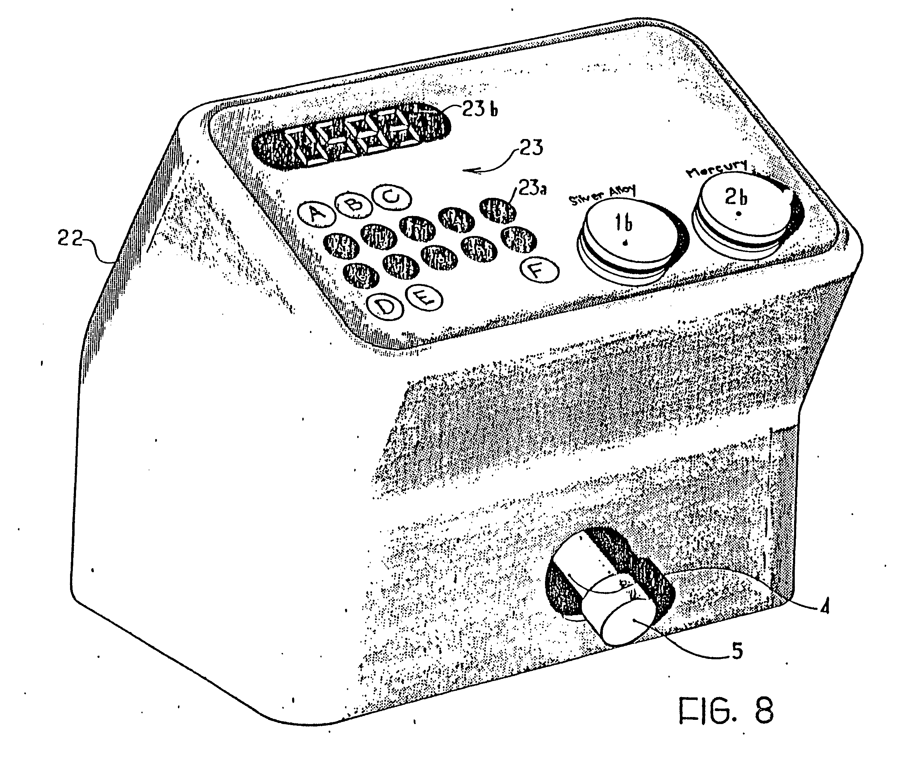

Comme on l'a précisé au début de ce présent mémoire et en se reportant au dessin de la figure 8, la coordination de fonctionnement des différents organes évoqués ci-dessus, est maîtrisée par un dispositif de commande renfermé à l'intérieur d'un boîtier 22 servant également d'enveloppe de protection de l'ensemble des organes du mélangeur-doseur.

Ce dispositif de commande est constitué d'une unité centrale électronique qui détermine, en fonction d'un programme de travail préétabli, la mise en service sélective des trois moteurs 6, 7 et 20 d'entraînement des mouvements de rotation de la vis transporteuse 8, du barillet 13, et de la couronne-support 19$_b$. Ce programme de travail préétabli comprend notamment des mémoires qui, établies en fonction des paramètres des deux convoyeurs I et II (pas de la vis 8 transporteuse, nombre de tours de la vis 8, volume de l'encoche 13$_a$, nombre de tours du barillet 13, etc...), permettent de déterminer la densité de la poudre d'argent utilisée, la masse totale de l'amalgame à délivrer, le pourcentage de mercure dans cet amalgame, et la durée des vibrations. Les données de ce programme de travail sont enregistrées par l'utilisateur au moyen d'un pupitre de commande 23 apparaissant sur la face supérieure du boîtier 22.

Ce pupitre 23 est constitué :

d'un clavier de touches 23$_a$ permettant d'entrer manuellement dans la susdite unité centrale électronique, les paramètres nécessaires à l'établissement du susdit programme de travail et éventuellement à l'exécution de fonctions auxiliaires,

et d'un écran à affichage numérique 23$_b$ permettant de visualiser l'exactitude des paramètres entrés dans la susdite unité centrale.

Le clavier 23$_a$ comporte d'une part, six touches de fonction et dites « qualitatives » sur lesquelles sont apposées sur fond blanc les lettres A, B, C, D, E, F, et d'autre part, dix touches dites « quantitatives » et sur lesquelles sont apposés sur fond gris les dix chiffres arabes de la numérotation décimale.

Les fonctions des touches qualitatives sont énumérées ci-après :

A : détermine la densité de la poudre d'argent introduite dans le réservoir 1 (cette densité est variable selon la nature de poudre employée) ;

B : détermine la masse totale d'amalgame dentaire à délivrer dans le godet de récupération 5 (cette masse apparaît en milligrammes sur l'écran 23$_b$) ;

C : détermine le pourcentage de mercure que l'on souhaite obtenir dans le mélange précédent ;

D : détermine la durée des vibrations auxquelles est soumis le mélangeur 4 et son godet de récupération 5 ;

E : détermine le départ des vibrations lorsqu'on adapte au mélangeur 4 un godet muni d'un mélange de mercure et de poudre d'argent prédosé ;

F : assure la mise en service du mélangeur-doseur de l'invention.

L'emploi du mélangeur-doseur ci-dessus décrit et représenté est simple car il suffit à l'utilisateur de connaître le fonctionnement des touches du clavier 23 tout en prenant la précaution de tenir remplis les deux réservoirs 1 et 2. Eventuellement des alarmes lumineuses ou sonores peuvent, associés à des moyens de détection des niveaux de poudre d'argent et de mercure dans les réservoirs 1 et 2, alerter l'utilisateur de l'appareil d'une insuffisance d'un des deux produits.

Ainsi il suffit à l'utilisateur d'appuyer :

dans un premier temps, sur la touche B et sur une ou plusieurs des touches quantitatives pour commander la masse totale d'amalgame dentaire souhaitée ;

dans un second temps, sur la touche C et sur une ou plusieurs des touches quantitatives pour commander le pourcentage de mercure souhaité ;

dans un troisième temps, sur la touche A et sur une ou plusieurs des touches quantitatives pour choisir la densité de la poudre d'argent utilisée ;

dans un quatrième temps, sur la touche D et sur une ou plusieurs touches quantitatives pour commander la durée des vibrations.

dans un cinquième et dernier temps, sur la touche F pour commander le fonctionnement du doseur-mélangeur lorsque les données paramétriques du mélange sont enregistrées.

Lorsque les vibrations sont terminées, il suffit alors de dégager le godet 5 et de récupérer l'amalgame dentaire venant d'être préparé.

Bien entendu, sans sortir du cadre de l'invention telle que définie par les revendications suivantes, diverses modifications et agencements pourront être apportés par l'homme de l'art au mélangeur-doseur qui vient d'être décrit uniquement à titre d'exemple non limitatif.

**Revendications**

1. Doseur-mélangeur automatique d'amalgames dentaires à base de poudre d'argent, comprenant un réservoir (2) pour le mercure et un réservoir (1) pour la poudre d'argent ouverts à leur partie inférieure et débouchant, par des moyens de distribution et de dosage des produits, à l'intérieur d'un mélangeur (4) muni en sortie d'un godet de récupération (5), caractérisé par le fait que les susdits moyens de distributions et de dosage des produits stockés dans les réservoirs sont constitués par deux convoyeurs — un (I) pour la poudre d'argent et un (II) pour le mercure — montés rotatifs à l'intérieur de deux fourreaux distincts solidaires (9 et 3'), perpendiculairement aux susdits réservoirs (1 et 2), du bâti-support dudit doseur-mélangeur et, chaque convoyeur étant muni sur sa longueur de deux lumières l'une d'admission (9a et 3'a) et l'autre de sortie (9b et 3'b) des produits, les mouvements de rotation de chacun des convoyeurs étant imprimés respectivement par un moteur pas à pas (6 et 7).

2. Doseur-mélangeur selon la revendication 1, caractérisé par le fait que le convoyeur (I) de la poudre d'argent est une vis transporteuse (8).

3. Doseur-mélangeur selon la revendication 1, caractérisé par le fait que le convoyeur (II) du mercure est un barillet (13) muni sur sa périphérie d'au moins une encoche calibrée (13a).

4. Doseur-mélangeur selon la revendication 1, caractérisé par le fait que le susdit mélangeur (4) est soumis à des vibrations au moyen d'un appareil (19) appelé vibreur et constitué d'un arbre incliné (19a) dont une extrémité est associée audit mélangeur et l'autre est associée, de manière excentrée, à une couronne (19b) animée d'un mouvement de rotation.

5. Doseur-mélangeur selon les revendications 1 et 2, caractérisé par le fait que le convoyeur (I) de la poudre d'argent comporte un plot (11) préformé pour se loger à l'intérieur de la rainure définie par le fond de filet de la vis transporteuse (8) et maintenu plaqué à l'intérieur de la rainure au moyen d'un ressort (11a) disposé normalement à l'axe de ladite vis et en un point de cette dernière situé diamétralement opposé à la lumière (9b) du fourreau (9) par laquelle la poudre d'argent dosée s'échappe à la sortie du convoyeur (I) pour être dirigée vers le mélangeur (4) au moyen d'un conduit court incliné (10).

6. Doseur-mélangeur selon les revendications 1 et 2, caractérisé par le fait que le réservoir (1) de poudre d'argent est muni d'un ressort à lame (12) dont une extrémité est fixée à la paroi interne du réservoir et l'autre extrémité, libre, prend appui sur le filetage de la vis transporteuse (8).

7. Doseur-mélangeur selon les revendications 1 et 3, caractérisé par le fait que les deux lumières d'admission (3'a) et de refoulement (3'b) du mercure sont ménagées, diamétralement opposées, dans le fourreau (3) du barillet (13) : la première (3'a) étant placée face à la base ouverte (2a) du réservoir (2) de mercure et la seconde (3'b) débouchant dans un conduit long incliné (14) destiné à conduire le mercure dosé vers le mélangeur (4).

8. Doseur-mélangeur selon les revendications 1 et 3, caractérisé par le fait que la susdite encoche (13a) du barillet (13) a la forme d'un méplat.

9. Doseur-mélangeur selon les revendications 1 et 3, caractérisé par le fait que le susdit barillet (13) est pourvu de part et d'autre de son encoche (13a), de gorges périphériques d'étanchéité (13b).

10. Doseur-mélangeur selon les revendications 1 et 3, caractérisé par le fait que le susdit barillet (13) comporte au moins un méplat (7'a) préformé sur l'accouplement (7') le reliant à son moteur pas à pas (7), ce méplat étant en relation avec un contacteur électrique à lame (16) afin de servir de point de repère de l'encoche (13a).

11. Doseur-mélangeur selon les revendications 1, 4, 5 et 7 prises ensemble, caractérisé par le fait que les sorties des deux conduits inclinés (10 et 14) d'acheminement de la poudre d'argent dosée et du mercure dosé, sont reliées à l'entrée (4a) du mélangeur (4) au moyen d'un connecteur souple déformable (17).

12. Doseur-mélangeur selon les revendications 1, 4 et 11, caractérisé par le fait que l'équilibre du mélangeur (4) autour de l'arbre incliné (19a) du vibreur (19) est assuré par la présence de deux ressorts (15a et 15b) calés entre le mélangeur (4) et un élément mobile (15c) pour régler l'inclinaison dudit mélangeur (4).

13. Doseur-mélangeur selon les revendications 1, 4 et 11, caractérisé par le fait que le susdit mélangeur (4) est constitué d'une part, d'un boîtier de jonction (4') qui est muni de l'ouverture (4a) assujettie au susdit connecteur souple (17) et autorisant l'entrée des produits dosés et qui est associé à l'arbre incliné (19a) du vibreur (19) et, d'autre part, d'un conduit (4") dont une extrémité est reliée à l'ouverture de sortie (4b) dudit boîtier de jonction et l'autre extrémité est préformée pour recevoir de manière amovible le susdit godet de récupération (5).

14. Doseur-mélangeur selon la revendication 11, caractérisé par le fait que le susdit connecteur souple déformable (17) adopte la forme d'un soufflet.

15. Doseur-mélangeur selon l'une quelconque des revendications 1 à 14, caractérisé par le fait que le réservoir de mercure (2) est formé d'une partie inférieure (2") et d'une partie supérieure (2'), la première définissant une colonne (2") dont la hauteur assure une régulation de débit et la seconde (2') un grand volume utile de stockage.

16. Dispositif de commande permettant d'automatiser et de programmer les opérations nécessaires au fonctionnement du doseur-mélangeur d'amalgames dentaires selon les revendications 1 à 15 prises ensemble, caractérisé par le fait qu'il est constitué d'une unité centrale de commande électronique qui détermine, en fonction d'un programme de travail préétabli et enregistré par l'utilisateur au moyen d'un pupitre de commande (23), la mise en service sélective des trois moteurs d'entraînement (6, 7 et 20) des mouvements de rotation des deux convoyeurs (I et II) et du vibreur (19).

17. Dispositif de commande selon la revendication 16, caractérisé par le fait que le susdit programme de travail préétabli comprend des mémoires permettant de déterminer la densité de la poudre d'argent utilisée, la masse totale de l'amalgame à délivrer, le pourcentage de mercure dans cet amalgame, et la durée des vibrations.

18. Dispositif de commande selon les revendications 16 et 17, caractérisé par le fait que le susdit pupitre de commande (23) comporte :

un clavier de touches (23a) permettant d'entrer manuellement dans la susdite unité centrale électronique, les paramètres nécessaires à l'établissement du susdit programme de travail et éventuellement à l'exécution de fonctions auxiliaires telle que celle permettant de soumettre aux vibrations, un godet de récupération (5) contenant un mélange prédosé,

et un écran (23b) permettant de visualiser l'exactitude des paramètres entrés dans la susdite unité centrale.

## Claims

1. Automatic dosing and mixing device for preparing dental amalgams with a silver powder basis, comprising a reservoir (2) for mercury, and a reservoir (1) for said silver powder, each of said reservoirs having an outlet at its lower part and emerging, through means for dispensing and dosing materials inside a mixer (4) provided at its lower end with a bucket (5) for receiving said materials, characterized in that said means for dispensing and dosing the products stored in the reservoirs consist of two conveyors — one (I) for the silver powder and one (II) for mercury — which are rotationally mounted inside two distinct sleeves (9, 3') perpendicular to said reservoirs (1, 2) and integral with the supporting frame for said dosing and mixing device, each of said sleeves having two ports, one inlet port (9a, 3'a) and one outlet port (9b, 3'b) for said materials, and each of said conveyors being rotationally driven by a step-by-step motor (6, 7).

2. Dosing and mixing device as set forth in Claim 1, characterized in that said conveyor (I) for silver powder is a threaded screw (8).

3. Dosing and mixing device as set forth in Claim 1, characterized in that said conveyor (II) for mercury is a barrel (13) provided with at least one calibrated notch (13a).

4. Dosing and mixing device as set forth in Claim 1, characterized in that said mixer (4) is vibrated by means of a vibrator (19) comprising an inclined shaft (19a) one end of which is coupled to said mixer and the other is eccentrically coupled to a ring (19a) rotationally actuated.

5. Dosing and mixing device as set forth in Claims 1 and 2, characterized in that said conveyor (I) for silver powder comprises a stud (11) adapted for embedding in the groove determined by the root of thread of said threaded screw (8), said stud being maintained firmly in position by a spring (11a) which is fitted perpendiculary to the axis of said screw (8) near the end of the screw opposite said outlet port (9b) of the sleeve (9) through which the dosed silver powder is loosened at the end of conveyor (I) and is routed to said mixer (4) through a short inclined duct (10).

6. Dosing and mixing device as set forth in Claims 1 and 2, characterized in that the reservoir (1) for silver powder is provided with a plate spring (12) having one end affixed to the inside wall of said reservoir, and the other end free and resting upon the thread of said threaded screw (8).

7. Dosing and mixing device as set forth in Claims 1 and 3, characterized in that the inlet port (3'a) and the outlet port (3'b) are diametrally opposite and are provided in the sleeve (3') of the barrel (13) : the inlet port (3'a) is located opposite the bottom opening (2a) of said second reservoir (2) for mercury and the outlet port (3'b) is located at the entry to a long inclined duct (14) for routing the mercury to the mixer (4).

8. Dosing and mixing device as set forth in Claims 1 and 3, characterized in that said calibrated notch (13a) of said barrel (13) has a flat shape.

9. Dosing and mixing device as set forth in Claims 1 and 3, characterized in that said barrel (13) is provided on either side of said notch (13a) with peripheral grooves (13b) for ensuring tightness.

10. Dosing and mixing device as set forth in Claims 1 and 3, characterized in that said barrel (13) is provided with a flat surface (7'a) shaped on the coupling (7') connecting said barrel to its step-by-step motor (7), said flat surface making contact with an electric switch (16) and serving as a reference point for locating said notch (13a).

11. Dosing and mixing device as set forth in Claims 1, 4, 5 and 7 taken together, characterized in that each of the outlets of said two inclined ducts (10, 14) for respectively routing the dosed silver powder and the dosed mercury are guided into the inlet orifice (4a) of the mixer (4) through a soft pliable connector (17).

12. Dosing and mixing device as set forth in Claims 1, 4 and 11, characterized in that the equilibrium of said mixer (4) around the inclined shaft (19a) of said vibrator (19) is ensured by the presence of two springs (15a and 15b) between the mixer (4) and a movable element (15c), permitting the adjustement of the inclination of said mixer (4).

13. Dosing and mixing device as set forth in Claims 1, 4 and 11, characterized in that said mixer (4) comprises a junction box (4') equipped with said inlet orifice (4a) connected to said soft connector (17), said inlet orifice allowing the admission of the dosed products, and said connector being connected to the inclined shaft (19a) of said vibrator (19), and characterized in that said mixer (4) further comprises a duct (4") having one end connected to the outlet orifice (4b) of said junction box and the other end being shaped to receive movably said bucket (5) for receiving the materials.

14. Dosing and mixing device as set forth in Claim 11, characterized in that said soft pliable connector (17) is a bellows.

15. Dosing and mixing device as set forth in any of Claims 1 to 14, characterized in that said reservoir (2) for mercury comprises a lower part (2″) and an upper part (2′), said lower part being in the form of a column (2″) the height of which ensures flow control, and said upper part (2′) having a large volume for ensuring storage.

16. A control device for automatizing and programming the operations for running the dosing and mixing device for preparing dental amalgams as set forth in Claims 1-15, characterized in that it comprises a central electronic control unit which determines, on the basis of a preestablished working programme entered through a control console (23), the selective actuation of three motors (6, 7 and 20) for rotating the two conveyors (I and II) and the vibrator (19).

17. A control device as set forth in Claim 16, characterized in that said pre-established working programm includes memories for determining the density of the silver powder used, the total mass of the dental amalgam to be delivered, the percentage of mercury in said dental amalgam, and the duration of the vibrations.

18. A control device as set forth in Claims 16 and 17, characterized in that said control console (23) comprises :

a keyboard (23a) for the manual entry into said central electronic unit of the parameters necessitated by the establishment of said working programme and by the performance of auxiliary functions such as allowing to vibrate a buck (5) for receiving the predosed materials,

and a display screen (23b) for displaying the parameters entered into said central unit.

## Patentansprüche

1. Automatische Dosier- und Mischvorrichtung für Zahnamalgame auf der Basis von Silberpulver, mit einem Quecksilber-Behälter (2) und einem Silberpulver-Behälter (1), welche an ihrem unteren Teil offen sind und über Mittel zum Verteilen und Dosieren der Produkte in das Innere eines Mischers (4) münden, welcher an seinem Ausgang mit einem Sammelbecher (5) versehen ist, dadurch gekennzeichnet, daß die Mittel zum Verteilen und Dosieren der in den Behältern enthaltenen Produkte aus zwei Förderern, einem Förderer (I) für das Silberpulver und einem Förderer (II) für das Quecksilber, bestehen, welche drehbar im Innern zweier unterschiedlicher, miteinander fest verbundener Hülsen (9, 3′) befestigt und senkrecht zu den Behältern (1, 2) des Gehäuses der Dosier- und Mischvorrichtung befestigt sind, wobei jeder Förderer auf seiner Länge mit zwei Öffnungen versehen ist, deren eine die Eintrittsöffnung (9a, 3′a) und deren andere die Austrittsöffnung (9b, 3′b) der Produkte ist, und wobei die Drehbewegungen der Förderer durch Schrittmotoren (6 bzw. 7) betätigt werden.

2. Dosier- und Mischvorrichtung nach Anspruch 1, dadurch gekennzeichnet, daß der Förderer (I) des Silberpulvers eine Transportschnecke (8) ist.

3. Dosier- und Mischvorrichtung nach Anspruch 1, dadurch gekennzeichnet, daß der Förderer (II) des Quecksilbers ein Fäßchen (13) ist, das auf seinem Umfang mit mindestens einem kalibrierten Ausschnitt (13a) versehen ist.

4. Dosier- und Mischvorrichtung nach Anspruch 1, dadurch gekennzeichnet, daß dem Mischer (4) mittels eines « Vibrator » genannten Apparats (19) Schwingungen aufgeprägt werden, und daß dieser Vibrator aus einer geneigten Welle (19a) besteht, deren eines Ende mit dem Mischer und deren anderes Ende exzentrisch mit einem Kranz (19b) verbunden ist, welcher einer Drehbewegung erfährt.

5. Dosier- und Mischvorrichtung nach den Ansprüchen 1 und 2, dadurch gekennzeichnet, daß der Förderer (I) des Silberpulvers einen Kontakt (11) aufweist, welcher derart gestaltet ist, daß er in der Rille ruht, welche durch den Boden der Windung der Transportschnecke (8) definiert ist, und fest in das Innere der Rille von einer Feder (11a) gehalten wird, welche senkrecht zur Achse der Schnecke und an einer Stelle angeordnet ist, welche diametral gegenüber von derjenigen Öffnung (9b) der Hülse (9) liegt, durch welche das dosierte Silberpulver zum Ausgang des Förderers (I) austritt, um dem Mischer (4) über eine kurze geneigte Leitung (10) zugeführt zu werden.

6. Dosier- und Mischvorrichtung nach den Ansprüchen 1 und 2, dadurch gekennzeichnet, daß der Silberpulver-Behälter (1) mit einer Blattfeder (12) versehen ist, deren eines Ende an der Innenwand des Behälters befestigt ist und deren anderes, freies Ende sich auf dem Gewinde der Transportschnecke (8) abstützt.

7. Dosier- und Mischvorrichtung nach den Ansprüchen 1 und 3, dadurch gekennzeichnet, daß die Eintrittsöffnung (3′a) und Austrittsöffnung (3′b) des Quecksilbers diametral gegenüberliegend in der Hülse (3) des Fäßchens (13) angebracht sind, wobei die erstere (3′a) der offenen Basis (2a) des Quecksilber-Behälters gegenüberliegt und die zweite (3′b) in eine lange geneigte Leitung (14) mündet, welche das dosierte Quecksilber dem Mischer (4) zuführt.

8. Dosier- und Mischvorrichtung nach den Ansprüchen 1 und 3, dadurch gekennzeichnet, daß der Ausschnitt (13a) des Fäßchens (13) die Form einer Abflachung hat.

9. Dosier- und Mischvorrichtung nach den Ansprüchen 1 und 3, dadurch gekennzeichnet, daß das Fäßchen (13) beidseits seines Ausschnittes (13a) mit umlaufenden Dichtrillen (13b) versehen ist.

10. Dosier- und Mischvorrichtung nach den Ansprüchen 1 und 3, dadurch gekennzeichnet, daß die Kopplung (7′), welche das Fäßchen (13) mit seinem Schrittmotor (7) verbindet, wenigstens eine Abflachung (7′a) aufweist, welche mit einem elektrischen Blattfederkontakt (16) verbunden ist, um dem Ausschnitt (13a) als Bezugspunkt zu dienen.

11. Dosier- und Mischvorrichtung nach den Ansprüchen 1, 4, 5 und 7, zusammengenommen, dadurch gekennzeichnet, daß die Ausgänge der beiden geneigten Leitungen (10, 14), welche der Zuführung des dosierten Silberpulvers und des dosierten Quecksilbers dienen, mit dem Eingang (4a) des Mischers (4) mittels eines weich verformbaren Kupplungsstücks (17) verbunden sind.

12. Dosier- und Mischvorrichtung nach den Ansprüchen 1, 4 und 11, dadurch gekennzeichnet, daß das Gleichgewicht des Mischers um die geneigte Achse (19a) des Vibrators (19) durch die Anwesenheit zweier Federn (15a, 15b) gesichert ist, welche zwischen dem Mischer (4) und einem beweglichen Teil (15a) angeordnet sind, um die Neigung des Mischers (4) einzustellen.

13. Dosier- und Mischvorrichtung nach den Ansprüchen 1, 4 und 11, dadurch gekennzeichnet, daß der Mischer (4) einerseits aus einem Übergangsgehäuse (4'), welches mit der Öffnung (4a) versehen ist, die an das weiche Übergangsstück (17) angeschlossen ist und die Zuführung der dosierten Produkte gestattet, und mit der geneigten Welle (19a) des Vibrators (19) verbunden ist, sowie andererseits einer Leitung (4") besteht, deren eines Ende mit der Ausgangsöffnung (4b) des Übergangsgehäuses verbunden ist und deren anderes Ende derart gestaltet ist, daß sie abnehmbar den Sammelbecher (5) aufnehmen kann.

14. Dosier- und Mischvorrichtung nach Anspruch 11, dadurch gekennzeichnet, daß das weich verformbare Übergangsstück (17) die Form eines Faltenbalges hat.

15. Dosier- und Mischvorrichtung nach einem der Ansprüche 1 bis 14, dadurch gekennzeichnet, daß der Quecksilber-Behälter (2) aus einem unteren (2") und einem oberen Teil (2') besteht, wobei der erste Teil eine Säule (2"), deren Höhe den Ausfluß regelt, und der zweite Teil ein großes Vorrats-Volumen bildet.

16. Steuervorrichtung zum Automatisieren und Programmieren der Arbeitsgänge, die für die Funktion der Dosier- und Mischvorrichtung gemäß den Ansprüchen 1 bis 15, zusammengenommen, erforderlich sind, dadurch gekennzeichnet, daß sie aus einer elektronischen zentralen Steuereinheit besteht, die abhängig von einem vorgegebenen und vom Benutzer eingegebenen Arbeitsprogramm mittels eines Steuerpults (23) das wahlweise Ingangsetzen der drei Antriebsmotoren (6, 7, 20) der Drehbewegungen der beiden Förderer (I, II) und des Vibrators (19) bestimmt.

17. Steuervorrichtung nach Anspruch 16, dadurch gekennzeichnet, daß das vorgegebene Arbeitsprogramm Speicher aufweist, um die Dichte des verwendeten Silberpulvers, die Gesamtmenge des herzustellenden Amalgams, den Prozentsatz des Quecksilbers in diesem Amalgam und die Dauer der Schwingungen einzugeben.

18. Steuervorrichtung nach den Ansprüchen 16 und 17, dadurch gekennzeichnet, daß das Schaltpult aufweist :

eine Tastatur (23a), um manuell in die Zentraleinheit die Parameter einzugeben, die zum Aufstellen des Arbeitsprogrammes und evtl. zum Ausführen von Hilfsfunktionen erforderlich sind, wie beispielsweise, um einen Sammelbecher (5), der eine vordosierte Mischung enthält, Schwingungen zu unterwerfen,

eine Anzeige, um den Zahlenwert der Parameter sichtbar zu machen, welche in die Zentraleinheit eingegeben sind.

FIG. 1

0 104 116

FIG. 2

FIG. 3

FIG. 4

FIG. 5

0 104 116

FIG. 6

13a

13a

13b

13

13

13

FIG. 7

FIG. 8